# EUROPEAN PATENT APPLICATION

(11) **EP 3 670 634 A1**
(43) Date of publication of application: **24.06.2020**
(21) Application number: 18306818.8
(22) Date of filing: 21.12.2018
(51) Int. Cl.: C09K 17/04, E02D 3/12, E02D 31/00

(54) **GEOLOGICAL BARRIERS**

(71) Applicant: IMERTECH SAS, 75015 Paris (FR)
(72) Inventor: The designation of the inventor has not yet been filed
(74) Representative: Haseltine Lake Kempner LLP

(57) **Abstract**

An artificial geological barrier, compositions for use in artificial geological barriers, methods of making said artificial geological barriers and composition, and uses of said artificial geological barriers and compositions.

## Description

### TECHNICAL FIELD

The present invention relates generally to artificial geological barriers and compositions for use in artificial geological barriers. The present invention further relates to methods of making said artificial geological barriers and compositions and the various uses of said artificial geological barriers and compositions.

### BACKGROUND

Various materials that may be toxic to the environment such as municipal and industrial waste materials may be stored or disposed of in geological sites, for example by burying underground. In accordance with European regulations, it is necessary that these sites have low permeability to toxic liquids to prevent them leaching into the surrounding environment. Compacted clay liners (CCLs) are made from one or more layers of compacted clay material, often on-site soils, provided they meet minimum hydraulic conductivity requirements. If on-site soils are not suitable, CCLs may be made by forming layers of a mixture of clay material and bentonite. Geosynthetic clay liners (GCLs) generally include a layer of bentonite with at least one membrane, usually two membranes on either side of the layer of bentonite. It is therefore desirable to provide alternative or improved barriers for use in storing or disposing of waste materials.

### SUMMARY

In accordance with a first aspect of the present invention there is provided an artificial geological barrier comprising an inorganic particulate material comprising one or more of talc, magnesite, chlorite, dolomite, and serpentine. The artificial geological barrier may, for example, be a compacted clay liner (CCL) or a geosynthetic clay liner (GCL).

In accordance with a second aspect of the present invention there is provided a composition comprising a mixture of soil and an inorganic particulate material comprising one or more of talc, magnesite, chlorite, dolomite, and serpentine.

In accordance with a third aspect of the present invention there is provided a method for making the artificial geological barrier of the first aspect of the present invention. The method may, for example, comprise forming one or more compacted layer(s) of a mixture of soil and the inorganic particulate material comprising one or more of talc, magnesite, chlorite, dolomite, and serpentine. The method may, for example, comprise layering the inorganic particulate material comprising one or more of talc, magnesite, chlorite, dolomite, and serpentine with a membrane layer. The method may, for example, comprise forming a layer of the inorganic particulate material comprising one or more of talc, magnesite, chlorite, dolomite, and serpentine between a first membrane layer and a second membrane layer.

In accordance with a fourth aspect of the present invention there is provided a method for making the composition of the second aspect of the present invention, the method comprising mixing the soil with the inorganic particulate material comprising one or more of talc, magnesite, chlorite, dolomite, and serpentine.

In accordance with a fifth aspect of the present invention there is provided a use of an artificial geological barrier of the first aspect of the present invention or the composition of the second aspect of the present invention for containing waste at a geological site, the method comprising constructing a layer of the artificial geological barrier of the first aspect of the present invention or a layer of the composition of the second aspect of the present invention at least partially around the waste.

Certain embodiments of any aspect of the present invention may provide one or more of the following advantages:
- reduced hydraulic conductivity;
- reduced amount of additive required;
- reduced cost.

The details, examples and preferences provided in relation to any particular one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

There is provided herein artificial geological barriers and compositions for use in artificial geological barriers. The artificial geological barriers and compositions described herein comprise an inorganic particulate material comprising one or more of talc, magnesite, chlorite, dolomite, and serpentine. The compositions described herein may, for example, consist essentially of or consist of soil and the inorganic particulate material comprising one or more of talc, magnesite, chlorite, dolomite, and serpentine. The compositions described herein may, for example, be used to make an artificial geological barrier as described herein, for example a compacted clay liner or a geosynthetic clay liner. The artificial geological barrier may, for example, consist essentially of or consist of a composition as described herein.

An artificial geological barrier is a non-naturally occurring structure that reduces or prevents the movement of fluids at a geological site.

The artificial geological barrier or composition described herein may, for example, have a hydraulic conductivity equal to or less than about 10⁻⁷ m/s. For example, the artificial geological barrier or composition described herein may have a hydraulic conductivity equal to or less than about 5 x 10⁻⁸ m/s or equal to or less than about 10⁻⁸ m/s or equal to or less than about 5 x 10⁻⁹ m/s or equal to or less than about 10⁻⁹ m/s. The artificial geological barrier or composition described herein may, for example, have a hydraulic conductivity equal to or greater than about 10⁻¹³ m/s or equal to or greater than about 5 x 10⁻¹³ or equal to or greater than about 10⁻¹² or equal to or greater than about 5 x 10⁻¹² m/s or equal to or greater than about 10⁻¹¹ m/s or equal to or greater than about 5 x 10⁻¹¹ or equal to or greater than about 10⁻¹⁰. For example, the artificial geological barrier or composition described herein may have a hydraulic conductivity ranging from about 10⁻¹³ m/s to about 10⁻⁷ m/s or from about 10⁻¹² m/s to about 10⁻⁸ m/s or from about 10⁻¹¹ m/s to about 10⁻⁹ m/s.

Hydraulic conductivity of the geological barrier may be measured by an oedometer test in accordance with NF X30-442. Hydraulic conductivity may be measured in accordance with the test described in the examples below. This may be especially applicable to CCLs. Hydraulic conductivity of GCLs may be measured by a flexible wall permeameter in accordance with ASTM D6766.

### Inorganic Particulate Material

The inorganic particulate material present in the artificial geological barriers and compositions described herein comprises one or more of talc, magnesite, chlorite, dolomite, and serpentine. For example, the inorganic particulate material may comprise two, three, four, or five of talc, magnesite, chlorite, dolomite, and serpentine. The inorganic particulate material may, for example, consist essentially of or consist of one or more of talc, magnesite, chlorite, dolomite, and serpentine. For example, the inorganic particulate material may consist essentially of or consist of two, three, four, or five of talc, magnesite, chlorite, dolomite, and serpentine.

The inorganic particulate material may, for example, comprise one or more of talc, magnesite, and chlorite. The inorganic particulate material may, for example, comprise two or three of talc, magnesite, and chlorite. For example, the inorganic particulate material may comprise talc. For example, the inorganic particulate material may comprise chlorite. For example, the inorganic particulate material may comprise magnesite. For example, the inorganic particulate material may comprise talc and chlorite. For example, the inorganic particulate material may comprise talc, chlorite, and dolomite. For example, the inorganic particulate material may comprise talc and magnesite. For example, the inorganic particulate material may comprise, talc, magnesite, and chlorite.

The term "talc" refers to a hydrated magnesium silicate clay mineral having the formula H₂Mg₃(SiO₃)₄ or Mg₃Si₄O₁₀(OH)₂, including synthetic talc (talcose). Talc may be associated with magnesite and/or chlorite in nature.

The term "magnesite" refers to a mineral with the chemical formula MgCO₃, which may be associated with talc and/or chlorite in nature.

The term "chlorite" refers to a group of phyllosilicate minerals having a typical chemical formula (Mg,Fe)₃(Si,Al)₄O₁₀(OH)₂·(Mg,Fe)₃(OH)₆, which may be associated with talc and/or magnesite in nature.

The term "serpentine" refers to a group of hydrous magnesium iron phyllosilicate minerals ((Mg,Fe)₃Si₂O₅(OH)₄), which may be associated with talc and/or magnesite and/or chlorite in nature.

The term "dolomite" refers to an anhydrous calcium magnesium carbonate mineral, typically CaMg(CO₃)₂, which may be associated with talc and/or magnesite and/or chlorite in nature.

When the inorganic particulate materials are obtained from naturally occurring sources, it may be that some mineral impurities will inevitably contaminate the ground material. In general, however, each mineral component will preferably contain less than 5% by weight, preferably less than 1% by weight of other mineral impurities.

The inorganic particulate material may, for example, comprise at least about 10 wt% of talc (based on the total weight of the inorganic particulate material comprising one or more of talc, magnesite, chlorite, dolomite, and serpentine). For example, the inorganic particulate material may comprise at least about 15 wt% or at least about 20 wt% or at least about 25 wt% or at least about 30 wt% or at least about 35 wt% or at least about 40 wt% or at least about 45 wt% or at least about 50 wt% of talc. The inorganic particulate material may, for example, comprise equal to or less than about 99 wt% talc. For example, the inorganic particulate material may comprise equal to or less than about 98 wt% or equal to or less than about 97 wt% or equal to or less than about 96 wt% or equal to or less than about 95 wt% or equal to or less than about 90 wt% or equal to or less than about 85 wt% or equal to or less than about 80 wt% or equal to or less than about 75 wt% or equal to or less than about 70 wt% or equal to or less than about 65 wt% or equal to or less than about 60 wt% or equal to or less than about 55 wt% or equal to or less than about 50 wt% or equal to or less than about 45 wt% of talc. For example, the inorganic particulate material may comprise from about 10 wt% to about 90 wt% of talc or from about 15 wt% to about 80 wt% of talc or from about 20 wt% to about 60 wt% of talc or from about 10 wt% to about 55 wt% of talc or from about 40 wt% to about 70 wt% of talc.

The inorganic particulate material may, for example, comprise at least about 0.5 wt% of magnesite (based on the total weight of the inorganic particulate material comprising one or more of talc, magnesite, chlorite, dolomite, and serpentine). For example, the inorganic particulate material may comprise at least about 1 wt% or at least about 5 wt% or at least about 10 wt% or at least about 15 wt% or at least about 20 wt% or at least about 25 wt% or at least about 30 wt% or at least about 35 wt% or at least about 40 wt% or at least about 45 wt% or at least about 50 wt% of magnesite. The inorganic particulate material may, for example, comprise equal to or less than about 95 wt% magnesite. For example, the inorganic particulate material may comprise equal to or less than about 90 wt% or equal to or less than about 85 wt% or equal to or less than about 80 wt% or equal to or less than about 75 wt% or equal to or less than about 70 wt% or equal to or less than about 65 wt% or equal to or less than about 60 wt% or equal to or less than about 55 wt% or equal to or less than about 50 wt% or equal to or less than about 45 wt% of magnesite. For example, the inorganic particulate material may comprise from about 1 wt% to about 95 wt% magnesite or from about 10 wt% to about 80 wt% of magnesite or from about 30 wt% to about 80 wt% of magnesite or from about 45 wt% to about 75 wt% of magnesite or from about 50 wt% to about 70 wt% of magnesite.

The inorganic particulate material may, for example, comprise at least about 0.5 wt% of chlorite (based on the total weight of the inorganic particulate material comprising one or more of talc, magnesite, chlorite, dolomite, and serpentine). For example, the inorganic particulate material may comprise at least about 1 wt% or at least about 5 wt% or at least about 10 wt% or at least about 15 wt% or at least about 20 wt% or at least about 25 wt% or at least about 30 wt% or at least about 35 wt% or at least about 40 wt% of chlorite. The inorganic particulate material may, for example, comprise equal to or less than about 95 wt% of chlorite. For example, the inorganic particulate material may comprise equal to or less than about 90 wt% or equal to or less than about 85 wt% or equal to or less than about 80 wt% or equal to or less than about 75 wt% or equal to or less than about 70 wt% or equal to or less than about 65 wt% or equal to or less than about 60 wt% or equal to or less than about 55 wt% or equal to or less than about 50 wt% or equal to or less than about 45 wt% of chlorite. For example, the inorganic particulate material may comprise from about 0.5 wt% to about 95 wt% of chlorite or from about 1 wt% to about 10 wt% of chlorite or from about 10 wt% to about 80 wt% of chlorite or from about 20 wt% to about 70 wt% of chlorite or from about 30 wt% to about 60 wt% of chlorite or from about 35 wt% to about 50 wt% of chlorite.

The inorganic particulate material may, for example, comprise at least about 0.5 wt% of dolomite (based on the total weight of the inorganic particulate material comprising one or more of talc, magnesite, chlorite, dolomite, and serpentine). For example, the inorganic particulate material may comprise at least about 1 wt% or at least about 1.5 wt% or at least about 2 wt% of dolomite. The inorganic particulate material may, for example, comprise equal to or less than about 10 wt% of dolomite. For example, the inorganic particulate material may comprise equal to or less than about 8 wt% or equal to or less than about 6 wt% or equal to or less than about 5 wt% or equal to or less than about 4 wt% or equal to or less than about 2 wt% of dolomite. For example, the inorganic particulate material may comprise from about 0.5 wt% to about 10 wt% or from about 0.5 wt% to about 5 wt% or from about 0.5 wt% to about 2 wt% of dolomite.

The inorganic particulate material may, for example, comprise at least about 0.5 wt% of serpentine (based on the total weight of the inorganic particulate material comprising one or more of talc, magnesite, chlorite, dolomite, and serpentine). For example, the inorganic particulate material may comprise at least about 1 wt% or at least about 1.5 wt% or at least about 2 wt% of serpentine. The inorganic particulate material may, for example, comprise equal to or less than about 15 wt% of serpentine. For example, the inorganic particulate material may comprise equal to or less than about 14 wt% or equal to or less than about 12 wt% or equal to or less than about 10 wt% or equal to or less than about 8 wt% or equal to or less than about 6 wt% or equal to or less than about 5 wt% or equal to or less than about 4 wt% or equal to or less than about 2 wt% of serpentine. For example, the inorganic particulate material may comprise from about 0.5 wt% to about 15 wt% or from about 0.5 wt% to about 10 wt% of serpentine.

The inorganic particulate material may, for example, comprise at least about 10 wt% of talc and/or at least about 10 wt% of magnesite and/or at least about 10 wt% of chlorite. For example, the inorganic particulate material may comprise at least about 20 wt% of talc and/or at least about 20 wt% of magnesite and/or at least about 20 wt% of chlorite.

The inorganic particulate material may, for example, comprise at least about 30 wt% of talc and at least about 20 wt% of chlorite. For example, the inorganic particulate material may comprise from about 30 wt% to about 80 wt% of talc and from about 20 wt% to about 70 wt% of chlorite. For example, the inorganic particulate material may comprise at least about 40 wt% of talc and at least about 30 wt% of chlorite. For example, the inorganic particulate material may comprise from about 40 wt% to about 70 wt% of talc and from about 30 wt% to about 60 wt% of chlorite. For example, the inorganic particulate material may comprise at least about 45 wt% of talc and at least about 35 wt% of chlorite. For example, the inorganic particulate material may comprise from about 45 wt% to about 65 wt% of talc and from about 35 wt% to about 55 wt% of chlorite. The inorganic particulate material may comprise at least about 50 wt% of talc and at least about 40 wt% of chlorite. For example, the inorganic particulate material may comprise from about 50 wt% to about 60 wt% of talc and from about 40 wt% to about 50 wt% of chlorite. The inorganic particulate material may, for example, further comprise dolomite, for example, in an amount of at least about 0.5 wt% or at least about 1 wt% or at least about 2 wt%, for example in an amount ranging from about 0.5 wt% to about 10 wt% or from about 1 wt% to about 5 wt% or from about 2 wt% to about 5 wt%.

The inorganic particulate material may, for example, comprise at least about 5 wt% of talc and at least about 30 wt% of magnesite. For example, the inorganic particulate material may comprise from about 5 wt% to about 60 wt% of talc and from about 30 wt% to about 90 wt% of magnesite. For example, the inorganic particulate material may comprise at least about 10 wt% of talc and at least about 40 wt% of magnesite. For example, the inorganic particulate material may comprise from about 10 wt% to about 55 wt% of talc and from about 40 wt% to about 70 wt% of magnesite. For example, the inorganic particulate material may comprise at least about 15 wt% of talc and at least about 45 wt% of magnesite. For example, the inorganic particulate material may comprise from about 15 wt% to about 50 wt% of talc and from about 45 wt% to about 65 wt% of magnesite. For example, the inorganic particulate material may comprise at least about 20 wt% of talc and at least about 50 wt% of magnesite. For example, the inorganic particulate material may comprise from about 20 wt% to about 45 wt% of talc and from about 50 wt% to about 70 wt% of magnesite. The inorganic particulate material may, for example, further comprise dolomite, for example, in an amount of at least about 0.5 wt% or at least about 1 wt% or at least about 2 wt%, for example in an amount ranging from about 0.5 wt% to about 10 wt% or from about 1 wt% to about 5 wt% or from about 2 wt% to about 5 wt%. The inorganic particulate material may, for example, further comprise chlorite, for example in an amount of at least about 0.5 wt% or at least about 1 wt% or at least about 2 wt%, for example in an amount ranging from about 0.5 wt% to about 10 wt% or from about 1 wt% to about 5 wt% or from about 2 wt% to about 5 wt%. The inorganic particulate material may, for example, further comprise serpentine, for example in an amount of at least about 0.5 wt% or at least about 1 wt% or at least about 2 wt%, for example in an amount ranging from about 0.5 wt% to about 10 wt% or from about 1 wt% to about 5 wt% or from about 2 wt% to about 5 wt%.

The mineralogy (% talc, % magnesite, % chlorite, % dolomite, % serpentine etc.) may, for example, be measured by X-Ray Diffraction and/or X-Ray fluorescence.

The inorganic particulate material may, for example, have a BET surface area equal to or greater than about 0.5 m²/g. For example, the inorganic particulate material may have a BET surface area equal to or greater than about 1 m²/g or equal to or greater than about 1.5 m²/g or equal to or greater than about 2 m²/g or equal to or greater than about 2.5 m²/g or equal to or greater than about 3 m²/g or equal to or greater than about 3.5 m²/g or equal to or greater than about 4 m²/g or equal to or greater than about 4.5 m²/g or equal to or greater than about 5 m²/g. The inorganic particulate material may, for example, have a BET surface area equal to or less than about 35 m²/g. For example, the inorganic particulate material may have a BET surface area equal to or less than about 34 m²/g or equal to or less than about 32 m²/g or equal to or less than about 30 m²/g or equal to or less than about 28 m²/g or equal to or less than about 26 m²/g or equal to or less than about 25 m²/g or equal to or less than about 24 m²/g or equal to or less than about 22 m²/g or equal to or less than about 20 m²/g or equal to or less than about 18 m²/g or equal to or less than about 16 m²/g or equal to or less than about 15 m²/g or equal to or less than about 14 m²/g or equal to or less than about 12 m²/g or equal to or less than about 10 m²/g. For example, the inorganic particulate material may have a BET surface area ranging from about 0.5 m²/g to about 35 m²/g or from about 1 m²/g to about 25 m²/g or from about 1.5 m²/g to about 15 m²/g or from about 2 m²/g to about 10 m²/g.

The inorganic particulate material may, for example, have a BET surface area equal to or less than about 5 m²/g. For example, the inorganic particulate material may have a BET surface area equal to or less than about 4.5 m²/g or equal to or less than about 4 m²/g or equal to or less than about 3.5 m²/g or equal to or less than about 3 m²/g or equal to or less than about 2.5 m²/g or equal to or less than about 2 m²/g or equal to or less than about 1.5 m²/g. For example, the inorganic particulate material may have a BET surface area ranging from about 0.5 m²/g to about 5 m²/g or from about 1 m²/g to about 4.5 m²/g or from about 1 m²/g to about 4 m²/g or from about 1 m²/g to about 3.5 m²/g. The inorganic particulate material may, for example, have a BET surface area within these ranges when used in a CCL.

The inorganic particulate material may, for example, have a BET surface area equal to or greater than about 5 m²/g. For example, the inorganic particulate material may have a BET surface area equal to or greater than about 6 m²/g or equal to or greater than about 8 m²/g or equal to or greater than about 10 m²/g or equal to or greater than about 12 m²/g or equal to or greater than about 14 m²/g or equal to or greater than about 15 m²/g. For example, the inorganic particulate material may have a BET surface area ranging from about 5 m²/g to about 35 m²/g or from about 10 m²/g to about 30 m²/g or from about 15 m²/g to about 25 m²/g. The inorganic particulate material may, for example, have a BET surface area within these ranges when used in a GCL.

BET surface area refers to the technique for calculating specific surface area of physical absorption molecules according to Brunauer, Emmett, and Teller ("BET") theory. BET surface area can be measured with a Gemini III 2375 Surface Area Analyzer, using nitrogen as the sorbent gas, from Micromeritics Instrument Corporation (Norcross, Ga., USA).

The inorganic particulate material may, for example, be a microcrystalline material (e.g. microcrystalline talc) or a macrocrystalline material (e.g. macrocrystalline talc). Microcrystalline talc materials are defined as materials which have small, randomly oriented platelets. Macrocrystalline talc materials are defined as materials which have large, well-defined platelets.

A highly lamellar talc will have large individual platelets, whereas a microcrystalline talc will have small platelets. Although all talcs may be termed lamellar, their platelet size differs from one deposit to another. Small crystals provide a compact, dense ore, known as microcrystalline talc. Large crystals come in papery layers, known as macrocrystalline talc. Known microcrystalline talc deposits are located in Montana (Yellowstone) and in Australia (Three Springs). In a microcrystalline structure, talc elementary particles are composed of small plates compared to macrocrystalline structures, which are composed of larger plates.

A microcrystalline talc may have an aspect ratio according to Jennings theory in the range of from about 3 to about 25, for example from about 5 to about 20 or from about 9 to about 15 or from about 10 to about 15. The Jennings theory (or Jennings approximation) of aspect ratio is based on research performed by W. Pabst, E. Gregorova, and C. Berthold, Department of Glass and Ceramics, Institute of Chemical Technology, Prague, and Institut fur Geowissenschaften, Universitat Tubingen, Germany, as described e. g. in Pabst W., Berthold C.: Part. Part. Syst. Charact. 24 (2007), 458, the contents of which are incorporated herein by reference.

A microcrystalline talc may have a BET surface area in the range of about 5 m²g⁻¹ to about 25 m²g⁻¹, for example from about 10 m²g⁻¹ to about 20 m²g⁻¹or from about 10 m²g⁻¹ to about 15 m²g⁻¹.

A microcrystalline talc may have an aspect ratio according to Jennings theory in the range of about 3 to about 25 and a BET surface area in the range of about 5 m²g⁻¹ about 25 m²g⁻¹. For example, the microcrystalline talc may have an aspect ratio according to Jennings theory in the range of about 9 to about 15, and a BET surface area of about 10 m²g⁻¹ to about 15 m²g⁻¹.

The inorganic particulate material may, for example, have a d₉₅ equal to or less than about 150 µm. For example, the inorganic particulate material may have a d₉₅ equal to or less than about 140 µm or equal to or less than about 130 µm or equal to or less than about 120 µm or equal to or less than about 110 µm or equal to or less than about 100 µm or equal to or less than about 90 µm or equal to or less than about 80 µm or equal to or less than about 70 µm or equal to or less than about 60 µm. The inorganic particulate material may, for example, have a d₉₅ equal to or greater than about 5 µm. For example, the inorganic particulate material may have a d₉₅ equal to or greater than about 10 µm or equal to or greater than about 15 µm or equal to or greater than about 20 µm or equal to or greater than about 25 µm or equal to or greater than about 30 µm or equal to or greater than about 35 µm or equal to or greater than about 40 µm or equal to or greater than about 45 µm or equal to or greater than about 50 µm. The inorganic particulate material may, for example, have a d₉₅ ranging from about 5 µm to about 150 µm or from about 20 µm to about 130 µm or from about 40 µm to about 120 µm or from about 40 µm to about 60 µm or from about 90 µm to about 120 µm.

The inorganic particulate material may, for example, have a d₉₅ equal to or greater than about 20 µm. For example, the inorganic particulate material may have a d₉₅ equal to or greater than about 30 µm or equal to or greater than about 40 µm or equal to or greater than about 50 µm or equal to or greater than about 60 µm or equal to or greater than about 70 µm or equal to or greater than about 80 µm or equal to or greater than about 90 µm or equal to or greater than about 100 µm. For example, the inorganic particulate material may have a d₉₅ ranging from about 20 µm to about 150 µm or from about 50 µm to about 150 µm or from about 100 µm to about 150 µm. The inorganic particulate material may, for example, have a d₉₅ within these ranges when used in a CCL.

The inorganic particulate material may, for example, have a d₉₅ equal to or less than about 50 µm. For example, the inorganic particulate material may have a d₉₅ equal to or less than about 40 µm or equal to or less than about 30 µm or equal to or less than about 25 µm or equal to or less than about 20 µm or equal to or less than about 15 µm. For example, the inorganic particulate material may have a d₉₅ ranging from about 5 µm to about 50 µm or from about 5 µm to about 40 µm or from about 5 µm to about 30 µm or from about 5 µm to about 20 µm. The inorganic particulate material may, for example, have a d₉₅ within these ranges when used in a GCL.

The inorganic particulate material may, for example, have a d₅₀ equal to or less than about 50 µm. For example, the inorganic particulate material may have a d₅₀ equal to or less than about 45 µm or equal to or less than about 40 µm or equal to or less than about 35 µm or equal to or less than about 30 µm or equal to or less than about 25 µm or equal to or less than about 20 µm or equal to or less than about 15 µm. The inorganic particulate material may, for example, have a d₅₀ equal to or greater than about 1 µm. For example, the inorganic particulate material may have a d₅₀ equal to or greater than about 2 µm or equal to or greater than about 5 µm or equal to or greater than about 10 µm or equal to or greater than about 15 µm or equal to or greater than about 20 µm or equal to or greater than about 25 µm or equal to or greater than about 30 µm. For example, the inorganic particulate material may have a d₅₀ ranging from about 5 µm to about 50 µm or from about 10 µm to about 40 µm or from about 10 µm to about 20 µm or from about 20 µm to about 40 µm.

The inorganic particulate material may, for example, have a d₅₀ equal to or greater than about 5 µm. For example, the inorganic particulate material may have a d₅₀ equal to or greater than about 10 µm or equal to or greater than about 15 µm or equal to or greater than about 20 µm. For example, the inorganic particulate material may have a d₅₀ ranging from about 5 µm to about 50 µm or from about 10 µm to about 50 µm or from about 15 µm to about 50 µm or from about 20 µm to about 50 µm. The inorganic particulate material may, for example, have a d₅₀ within these ranges when used in a CCL.

The inorganic particulate material may, for example, have a d₅₀ equal to or less than about 20 µm. For example, the inorganic particulate material may have a d₅₀ equal to or less than about 15 µm or equal to or less than about 10 µm or equal to or less than about 5 µm. For example, the inorganic particulate material may have a d₅₀ ranging from about 1 µm to about 20 µm or from about 1 µm to about 15 µm or from about 1 µm to about 10 µm or from about 1 µm to about 5 µm. The inorganic particulate material may, for example, have a d₅₀ within these ranges when used in a GCL.

The inorganic particulate material may, for example, have a d₂₅ equal to or less than about 25 µm. For example, the inorganic particulate material may have a d₂₅ equal to or less than about 24 µm or equal to or less than about 22 µm or equal to or less than about 20 µm or equal to or less than about 18 µm or equal to or less than about 16 µm or equal to or less than about 15 µm or equal to or less than about 14 µm or equal to or less than about 12 µm or equal to or less than about 10 µm. For example, the inorganic particulate material may have a d₂₅ equal to or greater than about 0.5 µm. For example, the inorganic particulate material may have a d₂₅ equal to or greater than about 1 µm or equal to or greater than about 1.5 µm or equal to or greater than about 2 µm or equal to or greater than about 2.5 µm or equal to or greater than about 3 µm. For example, the inorganic particulate material may have a d₂₅ ranging from about 0.5 µm to about 25 µm or from about 1 µm to about 20 µm or from about 1.5 µm to about 15 µm or from about 2 µm to about 14 µm or from about 5 µm to about 10 µm or from about 10 µm to about 15 µm.

The inorganic particulate material may, for example, have a d₂₅ equal to or greater than about 2.5 µm. For example, the inorganic particulate material may, for example, have a d₂₅ equal to or greater than about 3 µm or equal to or greater than about 4 µm or equal to or greater than about 5 µm or equal to or greater than about 6 µm or equal to or greater than about 7 µm or equal to or greater than about 8 µm or equal to or greater than about 9 µm or equal to or greater than about 10 µm. For example, the inorganic particulate material may have a d₂₅ ranging from about 2.5 µm to about 25 µm or from about 5 µm to about 25 µm or from about 10 µm to about 25 µm. The inorganic particulate material may, for example, have a d₂₅ within these ranges when it is used in a CCL.

The inorganic particulate material may, for example, have a d₂₅ equal to or less than about 15 µm. For example, the inorganic particulate material may have a d₂₅ equal to or less than about 14 µm or equal to or less than about 12 µm or equal to or less than about 10 µm or equal to or less than about 8 µm or equal to or less than about 6 µm or equal to or less than about 5 µm. For example, the inorganic particulate material may have a d₂₅ ranging from about 0.5 µm to about 15 µm or from about 0.5 µm to about 10 µm or from about 0.5 µm to about 5 µm. The inorganic particulate material may, for example, have a d₂₅ within these ranges when used in a GCL.

The inorganic particulate material may, for example, have a d₉₅ equal to or less than about 60 µm and a d₅₀ equal to or less than about 25 µm. The inorganic particulate material may, for example, have a d₉₅ equal to or less than about 60 µm, a d₅₀ equal to or less than about 25 µm, and a d₂₅ equal to or less than about 15 µm. For example, the inorganic particulate material may have a d₉₅ ranging from about 40 µm to about 60 µm and a d₅₀ ranging from about 5 µm to about 25 µm. For example, the inorganic particulate material may have a d₉₅ ranging from about 40 µm to about 60 µm, a d₅₀ ranging from about 5 µm to about 25 µm, and a d₂₅ ranging from about 5 µm to about 15 µm. For example, the inorganic particulate material may have a d₉₅ equal to or less than about 55 µm and a d₉₅ equal to or less than about 20 µm. For example, the inorganic particulate material may have a d₉₅ equal to or less than about 55 µm, a d₉₅ equal to or less than about 20 µm, and a d₂₅ equal to or less than about 10 µm. For example, the inorganic particulate material may have a d₉₅ ranging from about 45 µm to about 55 µm and a d₅₀ ranging from about 10 µm to about 20 µm. For example, the inorganic particulate material may have a d₉₅ ranging from about 45 µm to about 55 µm, a d₅₀ ranging from about 10 µm to about 20 µm, and a d₂₅ ranging from about 5 µm to about 10 µm. The inorganic particulate material may, for example, have a BET surface area ranging from about 2 m²/g to about 4 m²/g, for example from about 2.5 m²/g to about 3.5 m²/g.

The inorganic particulate material may, for example, have a d₉₅ equal to or less than about 120 µm and a d₅₀ equal to or less than about 40 µm. For example, the inorganic particulate material may, for example, have a d₉₅ equal to or less than about 120 µm, a d₅₀ equal to or less than about 40 µm, and a d₂₅ equal to or less than about 20 µm. For example, the inorganic particulate material may have a d₉₅ ranging from about 100 µm to about 120 µm and a d₅₀ ranging from about 20 µm to about 40 µm. For example, the inorganic particulate material may have a d₉₅ ranging from about 100 µm to about 120 µm, a d₅₀ ranging from about 20 µm to about 40 µm, and a d₂₅ ranging from about 5 µm to about 20 µm. For example, the inorganic particulate material may have a d₉₅ equal to or less than about 115 µm and a d₅₀ equal to or less than about 35 µm. For example, the inorganic particulate material may have a d₉₅ equal to or less than about 115 µm, a d₅₀ equal to or less than about 35 µm, and a d₂₅ equal to or less than about 15 µm. For example, the inorganic particulate material may have a d₉₅ ranging from about 105 µm to about 115 µm and a d₅₀ ranging from about 25 µm to about 35 µm. For example, the inorganic particulate material may have a d₉₅ ranging from about 105 µm to about 115 µm, a d₅₀ ranging from about 25 µm to about 35 µm, and a d₂₅ ranging from about 10 µm to about 15 µm. The inorganic particulate material may, for example, have a BET surface area ranging from about 0.5 m²/g to about 2.5 m²/g, for example from about 1 m²/g to about 2 m²/g.

Particle size distribution may be measured using a laser particle size analyzer (Mastersizer 2000). The powder is dispersed and suspended in water. The measurement is made at atmospheric pressure. The measureable particle size may indicate the relative coarseness of the inorganic particulate material. D₉₅ specifies the particle size at which 95 % of particles are smaller.

The inorganic particulate material may, for example:
comprise from about 40 wt% to about 70 wt% talc; and/or
comprise from about 30 wt% to about 65 wt% chlorite; and/or
comprise from about 0.5 wt% to about 10 wt% dolomite; and/or
have a BET surface area ranging from about 2 m²/g to about 4m²/g; and/or
have a d₉₅ ranging from about 40 µm to about 60 µm; and/or
have a d₅₀ ranging from about 5 µm to about 25 µm.

The inorganic particulate material may, for example:
comprise from about 40 wt% to about 70 wt% talc; and/or
comprise from about 30 wt% to about 55 wt% chlorite; and/or
comprise from about 0.5 wt% to about 10 wt% dolomite; and/or
have a BET surface area ranging from about 2 m²/g to about 4m²/g; and/or
have a d₉₅ ranging from about 40 µm to about 60 µm; and/or
have a d₅₀ ranging from about 5 µm to about 25 µm.

The inorganic particulate material may, for example:
comprise from about 10 wt% to about 55 wt% talc; and/or
comprise from about 40 wt% to about 80 wt% magnesite; and/or
comprise from about 0.5 wt% to about 10 wt% dolomite; and/or
comprise from about 0.5 wt% to about 10 wt% serpentine; and/or
comprise from about 0.5 wt% to about 10 wt% chlorite; and/or
have a BET surface area ranging from about 0.5 m²/g to about 2.5m²/g; and/or
have a d₉₅ ranging from about 100 µm to about 120 µm; and/or
have a d₅₀ ranging from about 20 µm to about 40 µm.

In compositions comprising, consisting essentially of, or consisting of the inorganic particulate material and soil, the composition may comprise equal to or greater than about 1 wt% of the dry inorganic particulate material based on the total dry weight of the soil. For example, the composition may comprise equal to or greater than about 2 wt% or equal to or greater than about 3 wt% or equal to or greater than about 4 wt% or equal to or greater than about 5 wt% of the dry inorganic particulate material based on the total dry weight of the soil. The compositions may, for example, comprise equal to or less than about 15 wt% of the dry inorganic particulate material based on the total dry weight of the soil. For example, the composition may comprise equal to or less than about 14 wt% or equal to or less than about 13 wt% or equal to or less than about 12 wt% or equal to or less than about 11 wt% or equal to or less than about 10 wt% of dry inorganic particulate material based on the total dry weight of the soil. For example, the compositions may comprise from about 1 wt% to about 15 wt% or from about 2 wt% to about 12 wt% or from about 3 wt% to about 10 wt% of the dry inorganic particulate material based on the total dry weight of the soil. By "dry", it is meant that the material has a moisture content of less than about 10 wt%, for example less than about 5 wt% or less than about 2 wt% or less than about 1 wt% or less than about 0.5 wt%. This is determined by a loss of weight after drying at 110°C until no further change in weight is detected.

### Soil

The inorganic particulate material may be mixed with soil in order to form a composition suitable for use in an artificial geological barrier.

Soil refers to an unconsolidated loose material that comprises mineral material. Soil may, for example, further comprise organic matter, microorganisms, and water.

The soil may, for example, be a coarse grain soil (more than 50 % retained on number 200 sieve) or a fine grain soil (more than 50 % passes a number 200 sieve) as defined in the unified soil classification system (ASTM-D2487). The soil may, for example, be classified as "sand" (more than 50% of coarse fraction passes a number 4 sieve) or "silt and clay with a liquid limit less than 50" or "silt and clay with a liquid limit of 50 or more", as defined in the unified soil classification system. The soil may, for example, be within the group "clayey sand" (SC), "clay" (CL), or "clay of high plasticity" (CH).

The soil may, for example, be obtained, fully or in part, from the geological site at which the artificial geological membrane is to be used.

The soil may, for example, be a class A, B, C, or D soil in accordance with GTR classification (NF P 11-300). For example, the soil may be an A or B or C class soil in accordance with GTR classification. For example, the soil may be a B class in accordance with GTR classification.

The soil may, for example, have a hydraulic conductivity equal to or greater than about 10⁻¹⁰ m/s. For example, the soil may have a hydraulic activity equal to or greater than about 5 x 10⁻¹⁰ or equal to or greater than about 10⁻⁹ or equal to or greater than about 5 x 10⁻⁹ m/s or equal to or greater than about 10⁻⁸ m/s or equal to or greater than about 5 x 10⁻⁸ m/s or equal to or greater than about 10⁻⁷ m/s. For example, the soil may have a hydraulic conductivity equal to or less than about 10⁻⁵ m/s. For example, the soil may have a hydraulic conductivity equal to or less than about 10⁻⁶ m/s or equal to or less than about 5 x 10⁻⁷ m/s. For example, the soil may have a hydraulic conductivity ranging from about 10⁻¹⁰ m/s to about 10⁻⁶ m/s or from about 10⁻⁹ m/s to about 10⁻⁶ m/s or from about 10⁻⁸ m/s to about 10⁻⁷ m/s. The hydraulic conductivity of the soil may be measured in accordance with NF X30-442.

The soil may, for example, have a methylene blue index of clay equal to or less than about 10 g/100g. For example, the soil may have a methylene blue index of clay equal to or less than about 8 g/100 g or equal to or less than about 6 g/100 g or equal to or less than about 5 g/100 g or equal to or less than about 4 g/100 g or equal to or less than about 4 g/100 g or equal to or less than about 3 g/100 g or equal to or less than about 2 g/100 g or equal to or less than about 1 g/100 g. The soil may, for example have a methylene blue index of clay equal to or greater than about 0.05 g/100 g or equal to or greater than about 0.1 g/100 g or equal to or greater than about 0.5 g/100 g. For example, the soil may have a methylene blue index of clay ranging from about 0 g/100 g to about 10 g/100 g or from about 0.05 g/100 g to about 5 g/100 g or from about 0.1 g/100 g to about 2 g/100 g. The methylene blue index of clay may be measured in accordance with NF P 94-068.

The soil may, for example, have a plasticity index equal to or less than about 60. For example, the soil may have a plasticity index equal to or less than about 50 or equal to or less than about 40 or equal to or less than about 30 or equal to or less than about 20 or equal to or less than about 15. The soil may, for example, have a plasticity index equal to or greater than about 0. For example, the soil may have a plasticity index equal to or greater than about 0.5 or equal to or greater than about 1 or equal to or greater than about 2 or equal to or greater than about 4 or equal to or greater than about 5 or equal to or greater than about 6 or equal to or greater than about 8 or equal to or greater than about 10. For example, the soil may have a plasticity index ranging from about 0 to about 60 or from about 0.5 to about 40 or from about 1 to about 20 or from about 5 to about 15. The plasticity index of soil may be measured in accordance with NF P 94-051.

At least about 10 % of particles in the soil may have a size equal to or greater than about 80 µm. For example, at least about 20 % or at least about 30 % or at least about 40 % or at least about 50 % or at least about 60 % or at least about 70 % or at least about 80 % or at least about 90 % of particles in the soil may have a size equal to or greater than about 80 µm. Equal to or less than about 90 % of particles in the soil may have a size equal to or greater than about 80 µm. For example, equal to or less than about 80 % or equal to or less than about 70 % of particles in the soil may have a size equal to or greater than about 80 µm. For example, from about 10 % to about 90 % or from about 30 % to about 80 % or from about 50 % to about 70 % of particles in the soil may have a size equal to or greater than about 80 µm.

At least about 10 % of particles in the soil may have a size less than about 80 µm. For example, at least about 20 % or at least about 30 % or at least about 40 % or at least about 50 % or at least about 60 % or at least about 70 % or at least about 80 % or at least about 90 % of particles in the soil may have a size less than about 80 µm. Equal to or less than about 90 % of particles in the soil may have a size less than about 80 µm. For example, equal to or less than about 80 % or equal to or less than about 70 % of particles in the soil may have a size less than about 80 µm. For example, from about 10 % to about 90 % or from about 30 % to about 80 % or from about 50 % to about 70 % of particles in the soil may have a size less than about 80 µm.

In certain embodiments, the soil may, for example, comprise, consist essentially of, or consist of from about 45 % to about 95 % of particles having a size equal to or greater than about 80 µm. For example, the soil may comprise, consist essentially of, or consist of from about 50 % to about 90 % or from about 55 % to about 85 % or from about 60 % to about 80 % or from about 65 % to about 75 % of particles having a size equal to or greater than about 80 µm. Additionally or alternatively, the soil may, for example, comprise, consist essentially of, or consist of from about 10 % to about 50 % of particles having a size less than about 80 µm. For example, the soil may comprise, consist essentially of, or consist of from about 15 % to about 45 % or from about 20 % to about 40 % or from about 25 % to about 45 % of particles having a size less than about 80 µm.

At least about 25 % of particles in the soil may have a size equal to or less than about 2 mm. For example, at least about 35 % or at least about 45 % or at least about 55 % or at least about 65 % or at least about 75 % or at least about 85 % or at least about 90 % or at least about 95 % of particles in the soil may have a size equal to or less than about 2 mm. Equal to or less than about 100 % of particles in the soil may have a size equal to or less than about 2 mm. For example, equal to or less than about 99 % or equal to or less than about 98 % of particles in the soil may have a particle size equal to or less than about 2 mm. For example, from about 25 % to about 100 % or from about 55 % to about 100 % or from about 80 % to about 100 % or from about 90 % to about 100 % or from about 95 % to about 100 % of particles in the soil may have a size equal to or less than about 2 mm.

At least about 50 % of particles in the soil may have a size equal to or less than about 5 mm. For example, at least about 60 % or at least about 70 % or at least about 80 % or at least about 90 % or at least about 95 % of particles in the soil may have a size equal to or less than about 5 mm. Equal to or less than about 100 % of particles in the soil may have a size equal to or less than about 5 mm. For example, equal to or less than about 99 % or equal to or less than about 98 % of particles in the soil may have a size equal to or less than about 5 mm.

Average particle size of soil may, for example, be measured in accordance with NF P 94-056.

In compositions comprising, consisting essentially of, or consisting of the inorganic particulate material and soil, the composition may comprise equal to or greater than about 75 wt% soil (based on the total dry weight of the composition). For example, the compositions may comprise equal to or greater than about 80 wt% or equal to or greater than about 85 wt% or equal to or greater than about 90 wt% or equal to or greater than about 95 wt% soil. The compositions may, for example, comprise equal to or less than about 99 wt% soil. For example, the compositions may comprise equal to or less than about 98 wt% or equal to or less than about 97 wt% or equal to or less than about 96 wt% or equal to or less than about 95 wt% or equal to or less than about 90 wt% soil. For example, the compositions may comprise from about 75 wt% to about 99 wt% or from about 80 wt% to about 98 wt% or from about 85 wt% to about 95 wt% soil (based on the total dry weight of the composition).

### Optional Additives

One or more optional additives may be combined with the inorganic particulate material comprising at least one of talc, magnesite, chlorite, dolomite, and serpentine, and/or soil in the artificial geological barriers and compositions described herein. Alternatively, the inorganic particulate material may not be combined with any further additives (other than soil) in the geological barriers and compositions described herein.

For example, the inorganic particulate material comprising at least one of talc, magnesite, chlorite, dolomite, and serpentine may or may not be combined with one or more additional (different) inorganic particulate materials in the artificial geological barriers and compositions described herein.

The one or more additional inorganic particulate materials may, for example, be selected from one or more of the following: smectite mineral (e.g. bentonite, palygorskite mineral, sepiolite mineral, alkaline earth metal carbonate (for example dolomite, i.e. CaMg(CO₃)₂), metal sulphate (for example gypsum), metal silicate, metal oxide (for example iron oxide, chromia, antimony trioxide or silica), metal hydroxide, wollastonite, bauxite, mica, zinc oxide (for example, zinc white or Chinese white), titanium dioxide (for example, anatase or rutile), zinc sulphide, lime (e.g. calcium oxide and/or calcium hydroxide), calcium carbonate (for example precipitated calcium carbonate (PCC), ground calcium carbonate (GCC) or surface-modified calcium carbonate), barium sulphate (for example, barite, blanc fixe or process white), alumina hydrate (for example, alumina trihydrate, light alumina hydrate, lake white or transparent white), clay (for example kaolin, calcined kaolin, China clay or bentonite), diatomaceous earth (also referred to as diatomite or DE), moler, perlite, zeolite, and combinations thereof.

The optional additives may, for example, be used in a total amount of up to about 10 % by weight of the dry composition. For example, the optional additives may be used in a total amount up to about 8 % or up to about 6 % or up to about 5 % or up to about 4 % or up to about 2 % by weight of the dry composition. For example, the optional additives may be used in a total amount of from about 0.05 wt% or from about 0.5 wt% or from about 1 % by weight of the dry composition. For example, the optional additives may be used in a total amount of from about 0.05 % to about 10 % or from about 0.5 % to about 5 % by weight of the dry composition.

### Compacted Clay Liners

The artificial geological barrier described herein may, for example, be a compacted clay liners (CCLs).

For example, the artificial geological barrier may comprise, consist essentially of, or consist of one or more layer(s) of a composition comprising soil and the inorganic particulate material comprising one or more of talc, magnesite, chlorite, dolomite, and serpentine. For example, the artificial geological barrier may comprise, consist essentially of, or consist of up to about 100 layer(s) of the composition. For example, the artificial geological barrier may comprise, consist essentially of, or consist of from about 5 to about 80 or from about 10 to about 60 or from about 15 to about 50 layer(s) of the composition.

The total thickness of the artificial geological barrier may, for example, be equal to or greater than about 0.25 m. For example, the total thickness of the artificial geological barrier may be equal to or greater than about 0.5 m or equal to or greater than about 1 m or equal to or greater than about 1.5 m or equal to or greater than about 2 m or equal to or greater than about 2.5 m. The total thickness of the artificial geological barrier may, for example, be equal to or less than about 10 m. For example, the total thickness of the artificial geological barrier may be equal to or less than about 8 m or equal to or less than about 6 m or equal to or less than about 5 m. For example, the total thickness of the artificial geological barrier may range from about 0.5 m to about 10 m or from about 1 m to about 8 m or from about 2 m to about 5 m. This may refer to the total thickness of the artificial geological barrier after the composition has been compacted.

Each of the one or more layer(s) of the composition may independently be compacted such that it is at least about 90 % of its maximum dry density, for example at least about 92 % or at least about 94 % or at least about 95 % or at least about 96 % or at least about 98 % of its maximum dry density. Maximum dry density may, for example, be measured by the Standard Proctor Test, in accordance with NF P 94-093.

Each of the one or more layer(s) of the composition may independently have a thickness equal to or greater than about 3 cm. For example, each of the one or more layer(s) of the composition may have a thickness equal to or greater than about 5 cm or equal to or greater than about 7 cm or equal to or greater than about 9 cm or equal to or greater than about 10 cm. Each of the one or more layer(s) of the composition may independently have a thickness equal to or less than about 75 cm. For example, each of the one or more layer(s) of the composition may have a thickness equal to or less than about 60 cm or equal to or less than about 50 cm or equal to or less than about 40 cm or equal to or less than about 30 cm or equal to or less than about 20 cm or equal to or less than about 18 cm or equal to or less than about 16 cm or equal to or less than about 15 cm. Each of the one or more layer(s) of the composition may independently have a thickness ranging from about 3 cm to about 75 cm or from about 5 cm to about 50 cm or from about 10 cm to about 40 cm. For example, each of the one or more layer(s) of the composition may independently have a thickness ranging from about 25 cm to about 45 cm or from about 30 cm to about 40 cm. This may refer to the thickness of each layer after it has been compacted.

The artificial geological barrier may, for example, further comprise one or more membranes (sheet like structure) which may, for example, be located above and/or below the one or more layers of composition comprising soil and an inorganic particulate material comprising one or more of talc, magnesite, chlorite, dolomite, and serpentine. The membrane may be located across the whole surface area of the artificial geological barrier. The membrane may, for example, be in contact with the uppermost or lowest layer of the composition comprising soil and the inorganic particulate material. The membrane may, for example, act to hold the composition comprising soil and/or inorganic particulate material in the desired configuration.

The membrane may, for example, be a geosynthetic such as a geotextile, geofilm or geomembrane. Geosynthetics are synthetic materials that are used to stabilize terrain. The geosynthetic may, for example, be made of a polymeric material.

Geotextiles may, for example, be permeable fabrics that have the ability to separate, filter, reinforce, protect, and/or drain. The geotextiles may, for example, comprise polypropylene (PP), polyethylene terephthalate (PET), polyester, or blends thereof. The geotextiles may be woven or non-woven. The geotextiles may be needle-punched and/or heat-bonded.

The geotextiles may, for example, be coated or laminated with a geofilm. The geofilm may, for example, comprise polypropylene, polyurethane, polyethylene (HDPE, LDPE, LLDPE), polyvinylchloride, ethylene propylene diene monomer, and combinations thereof. The geofilm may have a thickness up to about 10 mm, for example from about 3 mm to about 10 mm.

Geomembranes are thicker than geofilms (e.g. 10 mm or thicker). Geomembranes may comprise, HDPE, LDPE, LLDPE, polypropylene, polyvinylchloride, ethylene propylene diene monomer, and combinations thereof.

### Geosynthetic Clay Liners

The artificial geological barrier described herein may, for example, be a geosynthetic clay liner (GCL).

The artificial geological barrier may, for example, comprise at least one membrane and the inorganic particulate material comprising one or more of talc, magnesite, chlorite, dolomite, and serpentine. The at least one membrane may be positioned above or below the inorganic particulate material. The inorganic particulate material may, for example, be in contact with the at least one membrane. The inorganic particulate material may, for example, be present as a layer, for example across substantially the whole surface area of the at least one membrane, for example across at least about 90 % or at least about 95 % or at least about 98 % of the whole surface area of the at least one membrane.

The artificial geological barrier may, for example, comprise two membranes wherein the inorganic particulate material comprising one or more of talc, magnesite, chlorite, dolomite, and serpentine is sandwiched between the first membrane and the second membrane. The artificial geological barrier may, for example, consist essentially of or consist of two membranes wherein the inorganic particulate material comprising one or more of talc, magnesite, chlorite, dolomite, and serpentine is sandwiched between the first membrane and the second membrane. The inorganic particulate material may, for example, be in contact with the first and/or second membrane. The inorganic particulate material may, for example, be present as a layer between the first and second membrane, for example as a layer across substantially the whole surface area of at least one of the membranes, for example across substantially the whole surface area of at least one of the membranes, for example at least about 90 % or at least about 95 % or at least about 98 % of the surface area of at least one of the membranes. Where the artificial geological barrier comprises two membranes, a layer of the inorganic particulate material may, for example, be present across substantially the whole surface area of a membrane that is underneath the layer of the inorganic particulate material, for example at least about 90 % or at least about 95 % or at least about 98 % of the surface area of a membrane that is underneath the layer of the inorganic particulate material.

The layer of the inorganic particulate material may, for example, consist essentially of the inorganic particulate material comprising one or more of talc, magnesite, chlorite, dolomite, and serpentine. For example, the layer of the inorganic particulate material may comprise at least about 90 wt% or at least about 92 wt% or at least about 94 wt% or at least about 95 wt% or at least about 96 wt% or at least about 98 wt% or at least about 99 wt% of the inorganic particulate material comprising one or more of talc, magnesite, chlorite, dolomite, and serpentine. For example, the layer of the inorganic particulate material may comprise up to 100 wt%, for example 100 wt%, of the inorganic particulate material comprising one or more of talc, magnesite, chlorite, dolomite, and serpentine. The layer of the inorganic particulate material may, for example, further comprise soil or one of the other optional additives described above.

The inorganic particulate material comprising one or more of talc, magnesite, chlorite, dolomite, and serpentine may, for example be present in the artificial geological barrier in an amount of at least about 1000 g/m² by surface area of the at least one membrane. For example, the inorganic particulate material may be present in the artificial geological barrier in an amount of at least about 2000 g/m² or at least about 3000 g/m² or at least about 4000 g/m² or at least about 5000 g/m² or at least about 6000 g/m² or at least about 7000 g/m² or at least about 8000 g/m² or at least about 9000 g/m² or at least about 10,000 g/m² by surface area of the at least one membrane. The inorganic particulate material may, for example, be present in the artificial geological barrier in an amount up to about 15,000 g/m² by surface area of the at least one membrane. For example, the inorganic particulate material may be present in the artificial geological barrier in an amount up to about 14,000 g/m² or up to about 13,000 g/m² or up to about 12,000 g/m² or up to about 11,000 g/m² or up to about 10,000 g/m² by surface area of the at least one membrane. For example, the inorganic particulate material may be present in the artificial geological barrier in an amount ranging from about 1000 g/m² to about 15,000 g/m² or from about 2000 g/m² to about 14,000 g/m² or from about 5000 g/m² to about 12,000 g/m² by surface area of the at least one membrane. The at least one membrane may, for example, be a membrane that is underneath the inorganic particulate material.

The inorganic particulate material may, for example, be adhered to one or more of the membranes in the artificial geological barrier, for example using an adhesive or by mechanical means (e.g. needle punching, compression, stitch bonding).

The artificial geological barrier may or may not comprise additional layers of other materials (in addition to the layer of the inorganic particulate material comprising one or more of talc, magnesite, chlorite, dolomite, and serpentine). The additional layers may, for example, comprise soil or one of the other optional additives described above.

The membrane may be any sheet-like structure that acts to hold the inorganic particulate material in the desired configuration. Where the artificial geological barrier comprises two or more membranes, the membranes may be held together to enclose the inorganic particulate material, for example using an adhesive or by stitching. Where the artificial geological barrier comprises two or more membranes, the membranes may have substantially (at least about 90 % or at least about 95 % or at least about 98 %) the same surface area and/or shape.

The membrane may, for example, be a geosynthetic such as a geotextile, geofilm or geomembrane. Geosynthetics are synthetic materials that are used to stabilize terrain. The geosynthetic may, for example, be made of a polymeric material.

Geotextiles may, for example, be permeable fabrics that have the ability to separate, filter, reinforce, protect, and/or drain. The geotextiles may, for example, comprise polypropylene (PP), polyethylene terephthalate (PET), polyester, or blends thereof. The geotextiles may be woven or non-woven. The geotextiles may be needle-punched and/or heat-bonded.

The geotextiles may, for example, be coated or laminated with a geofilm. The geofilm may, for example, comprise polypropylene, polyurethane, polyethylene (HDPE, LDPE, LLDPE), polyvinylchloride, ethylene propylene diene monomer, and combinations thereof. The geofilm may have a thickness up to about 10 mm, for example from about 3 mm to about 10 mm.

Geomembranes are thicker than geofilms (e.g. 10 mm or thicker). Geomembranes may comprise, HDPE, LDPE, LLDPE, polypropylene, polyvinylchloride, ethylene propylene diene monomer, and combinations thereof.

The total thickness of the artificial geological barrier may, for example, be equal to or greater than about 1 mm. For example, the total thickness of the artificial geological barrier may be equal to or greater than about 2 mm or equal to or greater than about 3 mm or equal to or greater than about 4 mm or equal to or greater than about 5 mm or equal to or greater than about 6 mm. The total thickness of the artificial geological barrier may, for example, be equal to or less than about 20 mm. For example, the total thickness of the artificial geological barrier may be equal to or less than about 18 mm or equal to or less than about 16 mm or equal to or less than about 15 mm or equal to or less than about 14 mm or equal to or less than about 12 mm or equal to or less than about 10 mm. For example, the total thickness of the artificial geological barrier may be from about 1 mm to about 20 mm or from about 2 mm to about 15 mm or from about 4 mm to about 10 mm.

The total thickness of the layer comprising the inorganic particulate material comprising one or more of talc, magnesite, chlorite, dolomite, and serpentine may, for example, be equal to or greater than about 0.5 mm. For example, the total thickness of the layer comprising the inorganic particulate material may be equal to or greater than about 1 mm or equal to or greater than about 2 mm or equal to or greater than about 3 mm or equal to or greater than about 4 mm or equal to or greater than about 5 mm or equal to or greater than about 6 mm. The total thickness of the layer comprising the inorganic particulate material may be equal to or less than about 20 mm. For example, the total thickness of the layer comprising the inorganic particulate material may be equal to or less than about 18 mm or equal to or less than about 16 mm or equal to or less than about 15 mm or equal to or less than about 14 mm or equal to or less than about 12 mm or equal to or less than about 10 mm. For example, the total thickness of the layer of the inorganic particulate material may be from about 0.5 mm to about 20 mm or from about 2 mm to about 15 mm or from about 4 mm to about 10 mm.

### Methods for Making the Artificial Geological Barriers

The artificial geological barriers may, for example, be made according to any method known to those skilled in the art.

The artificial geological barriers (e.g. CLLs) may, for example, be made by providing one or more layers of a composition comprising a mixture of soil and the inorganic particulate material and compacting each layer, for example compacting each layer after each layer is formed and before the next layer is formed. The layers may, for example, be as specified above. Moisture may, for example, be added to the composition before and/or after each layer is formed, for example before each layer is compacted. The amount of moisture added may, for example, be +/- about 3% of the optimal moisture content (OMC) as determined by the Proctor Test as described above.

The artificial geological barriers (e.g. GCLs) may, for example, be made by forming a layer comprising the inorganic particulate material on a membrane. The method may, for example, comprising forming a layer comprising the inorganic particulate material between a first membrane and a second membrane. The first and second membranes may then be adhered together, for example using an adhesive or by mechanical means. Moisture may, for example, be added to the layer comprising the inorganic particulate material. The amount of moisture added may, for example, be +/- about 3% of the optimal moisture content (OMC) as determined by the Proctor Test as described above.

### Methods for Making the Compositions

The compositions described herein may be made according to any method known to those skilled in the art.

For example, the compositions described herein may be made by mixing soil with the inorganic particulate material comprising one or more of talc, magnesite, chlorite, dolomite, and serpentine. Any suitable mixing equipment may be used.

### Uses of the Artificial Geological Barriers and Compositions

The compositions described herein (comprising a mixture of soil and the inorganic particulate material comprising one or more of talc, magnesite, chlorite, dolomite, and serpentine) may be used to make the artificial geological barriers described herein (e.g. a CCL or GCL).

The artificial geological barriers and compositions described herein may be used for containing waste at a geological site. A layer may be constructed at least partially around the waste using the artificial geological barriers and/or compositions described herein. For example, the layer may be constructed underneath and/or at the sides of the waste (a liner structure). For example, the layer may be constructed on top of the waste (a cap structure). For example, a layer may be constructed that completely surrounds the waste using the artificial geological barriers and/or compositions described herein. For example, the layer may be constructed underneath, at the sides, and on top of the waste (liner and cap structure). The layers of the artificial geological barriers and/or compositions described herein may be constructed before the waste is deposited on one side of the layer.

The waste may, for example, be any municipal or industrial waste. The geological site may, for example, be an irrigation pond, a landfill site, an industrial mineral site, a mining site, a fly-ash repository site, or a coal-ash repository site. The artificial geological barrier may, for example, be used to contain liquids such as aqueous solutions, a leachate or a brine.

### EXAMPLES

The effect of additives on the hydraulic conductivity of a reference soil was determined by an oedometer test.

The reference soil was comprised of 70 wt% of a sand-like material having an average particle size above 80 µm and 30 wt% of a clay-like material having an average particle size below 80 µm. The reference soil had 31 % of particles smaller than 80 µm, 99 % of particles smaller than 2 mm, and 100 % of particles smaller than 5 mm. The reference soil had a methylene blue index of clay of 0.5 g/100 g, a plasticity index of 0 to 12, and a hydraulic conductivity of 5 x 10⁻⁸. The reference soil was a class B5 soil in accordance with GTR classification (NF P 11-300).

The clay material had a natural water content of 16.4 %, 86.6 % of particles smaller than 0.08 mm, and a dₘₐₓ of 3.15 mm. The clay material further had an optimal dry density of 1.6 T/m³, an optimal water content of 22.4 %, and Atterberg limits as follows: Liquid limit (WL): 45, Plastic limit (WP): 25, Plasticity index (PI): 21.

The additives were bentonite (comparative example) and 2 different macro-crystalline talc samples.

The bentonite had a mineralogy of more than 50 % montmorillonite, less than 50 % calcite, and less than 10 % mica and quartz. The bentonite had a d₉₅ of 87.1 µm, a d₅₀ of 12.6 µm, and a d₂₅ of 8.2 µm.

Talc A had a mineralogy of 50-60 % talc, 40-45 % chlorite, and 2.5-5 % dolomite. Talc A had a BET surface area of 2.9 m²/g, a d₉₅ of 51 µm, a d₅₀ of 14.2 µm, and a d₂₅ of 8.2 µm.

Talc B had a mineralogy of 50-70 % magnesite, 20-45 % talc, 5-9% chlorite/serpentine, and 0.5-2 % dolomite. Talc B had a BET surface area of 1.3 m²/g, a d₉₅ of 107.5 µm, a d₅₀ of 32 µm, and a d25 of 13.4 µm.

The protocol for the oedometer test was as follows.
- The reference soil was dried in the oven, the dried materials were weighed and mixed in a laboratory mixer;
- 10 wt% water was gradually introduced into the mixer;
- The sample was sealed;
- After 1 day, the sample was compacted with normal energy;
- The sample was set up in an oedometric cell and saturated with water for 2 days before the start of the measurements;
- A pressure of 43.5 kPa was applied to facilitate sample introduction in the oedometric cell;
- The hydraulic conductivity was measured.

The results are shown in Table 1 below.

**Table 1.**

| **Sample** | **Hydraulic Conductivity (m/s)** |
|---|---|
| Reference soil | 5.10⁻⁸ |
| Reference soil + 2.5 % bentonite | 4.10⁻⁸ |
| Reference soil + 5 % bentonite | 1.10⁻⁸ |
| Reference soil + 2.5 % Talc A | 4.10⁻⁹ |
| Reference soil + 5 % Talc A | 3.10⁻⁹ |
| Reference soil + 2.5 % Talc B | 4.10⁻¹⁰ |
| Reference soil + 5 % Talc B | 3.10⁻¹⁰ |

It was found that the best results (lowest hydraulic conductivity) were obtained with the talc additives.

The foregoing broadly describes certain embodiments of the present invention without limitation. Variations and modifications as will be readily apparent to those skilled in the art are intended to be within the scope of the present invention as defined in and by the appended claims.

## Claims

1. An artificial geological barrier comprising an inorganic particulate material comprising one or more of talc, magnesite, chlorite, dolomite, and serpentine.

2. A composition comprising a mixture of soil and an inorganic particulate material comprising one or more of talc, magnesite, chlorite, dolomite, and serpentine.

3. The artificial geological barrier of claim 1 or the composition of claim 2, wherein the inorganic particulate material comprises at least one, at least two, or all three of talc, magnesite, and chlorite.

4. The artificial geological barrier or the composition of any preceding claim, wherein the inorganic particulate material comprises:
at least about 10 wt% of talc; and/or
at least about 0.5 wt% of magnesite; and/or
at least about 0.5 wt% of chlorite.

5. The artificial geological barrier or the composition of any of claims 1 to 4, wherein the inorganic particulate material comprises:
from about 45 wt% to about 65 wt% of talc; and/or
from about 35 wt% to about 50 wt% of chlorite.

6. The artificial geological barrier or the composition of any of claims 1 to 4, wherein the inorganic particulate material comprises:
from about 45 wt% to about 75 wt% magnesite; and/or
from about 15 wt% to about 50 wt% talc.

7. The artificial geological barrier or the composition of any preceding claim, wherein the inorganic particulate material has a BET surface area equal to or greater than about 0.5 m²/g and/or equal to or less than about 35 m²/g.

8. The artificial geological barrier or the composition of any preceding claim, wherein the inorganic particulate material has:
a d₉₅ equal to or less than about 150 µm and/or equal to or greater than about 5 µm; and/or
a d₅₀ equal to or less than about 50 µm and/or equal to or greater than about 1 µm.

9. The artificial geological barrier of any preceding claim, wherein the artificial geological barrier comprises a mixture of soil and the inorganic particulate material.

10. The artificial geological barrier of claim 9, wherein the composition comprises equal to or greater than about 1 wt% and/or equal to or less than about 15 wt% of the dry inorganic particulate material based on the total dry weight of the soil.

11. The artificial geological barrier of any preceding claim, wherein the artificial geological barrier comprises a membrane.

12. The artificial geological barrier of any preceding claim, wherein the inorganic particulate material is sandwiched between a first membrane and a second membrane.

13. The artificial geological barrier of claim 12, wherein the inorganic particulate material is present in an amount equal to or greater than about 1000 g/m² and/or equal to or less than about 15,000 g/m² by area of the membrane.

14. A method of making an artificial geological barrier or a composition of any preceding claim.

15. Use of an artificial geological barrier a composition of any preceding claim for containing waste at a geological site, the method comprising constructing a layer of the artificial geological barrier or the composition of any preceding claim at least partially around the waste.
